# EUROPEAN PATENT SPECIFICATION

(11) **EP 1 604 958 B1**
(45) Date of publication and mention of the grant of the patent: **02.03.2011**
(21) Application number: 05103972.5
(22) Date of filing: 12.05.2005
(51) Int. Cl.: C03B 29/08

(54) **Method and apparatus for heating glass panels**
Verfahren und Vorrichtung zum Erwärmen von Glasscheiben
Procédé et appareil pour chauffer des feuilles de verre

(30) Priority: 09.06.2004 FI 20045214
(43) Date of publication of application: 14.12.2005
(73) Proprietor: Glaston Services Ltd. Oy, 33730 Tampere (FI)
(72) Inventor: Pesonen, Tarmo, 37550 Lempäälä (FI); Kurvinen, Jari, 37830 Viiala (FI)
(74) Representative: LEITZINGER OY

(56) References cited:
- EP-A- 0 721 922
- EP-A- 1 209 432
- US-A- 2 856 506

## Description

The present invention relates to a method for heating glass panels in a heating oven, wherein the glass panel is supported on top of rolls and said glass panel is heated from above and below with convection air or with a combination of convection air and radiation heat, said convection air being heated by electric resistances and/or a combustible gas.

In addition, the present invention relates to a heating oven for heating glass panels in the heating oven, comprising rolls for supporting a glass panel, convection air blast means capable of heating the glass panel either alone or in combination with thermal radiators, and further comprising electric resistances and/or a gas burner for heating convection air.

This type of method and heating oven for heating a glass panel or sheet are prior known for example from the Applicant's patent application FI 20011923. In that document, above and below a glass panel present within a heating compartment are disposed radiation heaters and convection air pipes, by which the convection air is supplied from outside the oven into the heating compartment and blasted to the surface of a glass sheet by way of nozzles included in the convection air pipes.

The Applicant's patent application EP 721922 discloses another prior known glass sheet heating method, based on convection blasting. The convection air is circulated onto the surface of a glass sheet through a fan and a resistance fitted in the nozzle box. A oven applying a similar principle is known from Patent publication EP 910553. This comprises radiation panels heated by resistances, the heat delivered thereby to a glass sheet providing a versatile oven configuration, regarding especially the development of a temperature profile. A principal function of the panels is the equalization of temperature differences caused by blasting at the surface of a glass sheet.

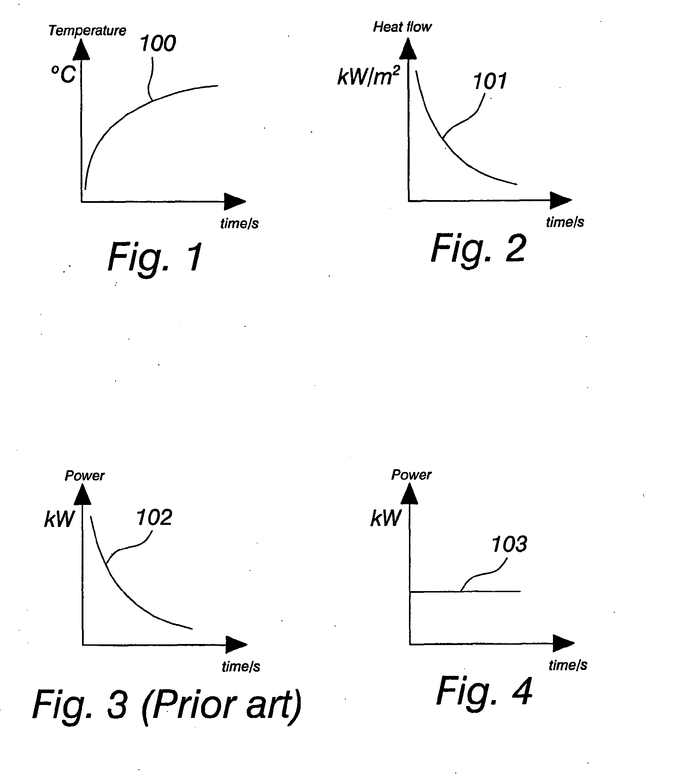

In the process of heating glass from room temperature to a tempering temperature of about 600-640°C, the temperature rise is consistent with a graph 100 shown in fig. 1. Temperature rises as a function of time quickly at first and the rise becomes consistently slower, reaching its final tempering temperature little by little. Fig. 2 illustrates a graph 101 representing the rate of heat flow proceeding to a glass panel over the respective period. Fig. 3 illustrates the power (graph 102) of a prior art heating source, i.e. convection-air heating resistances, as a function of time, said power correlating with a heat flow captured by glass. In convection blast systems as described in the cited references, the resistances will have to be rated for power outputs according to the maximum heat flow (fig. 2) captured by a glass panel.

It is an object of the present invention to provide a method and an apparatus, enabling a glass panel to be heated more efficiently than in prior known solutions and/or convection-air heating thermal sources to be rated for a power lower than before.

In order to achieve the above objective, a method of the invention is characterized in that the heating of convection air is effected by using a heat accumulator inside the heating oven; and that the heat accumulator is heated by means of the electric resistances and/or a combustible gas.

Furthermore, an apparatus applying the inventive method is characterized in that inside the heating oven there is a heat accumulator, capable of heating convection air and that the heat accumulator is set in communication with the electric resistances and/or a gas burner for heating the heat accumulator.

This solution makes it possible that, in the beginning of a heating cycle, some of the heating effect captured by glass can be claimed from the heat accumulator. A notable advantage of this is that heating sources can be rated for a power lower than what is feasible without a heat accumulator. A further advantage is gained by placing the heat accumulator in communication with heating sources.

Preferred embodiments of the present invention are set forth in the dependent claims.

The present invention will now be described in more detail with reference to the accompanying drawings, in which:
- Fig. 1: shows temperature of a glass panel as a function of time,
- Fig. 2: shows the rate of a heat flow proceeding to a glass panel, as a function of time,
- Fig. 3: shows a prior art for power delivered by heaters, as a function of time,
- Fig. 4: shows the average heating effect as a function of time, and
- Fig. 5: shows one embodiment of an apparatus applying the inventive method.

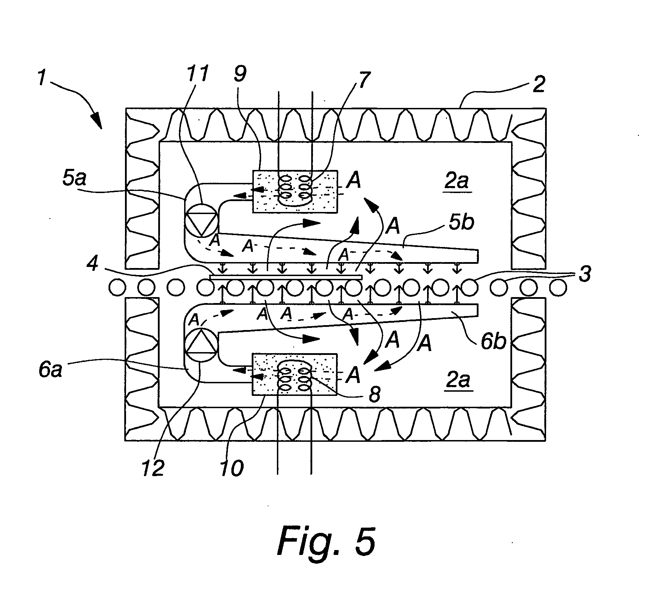

Hence, one exemplary embodiment for an apparatus applying the inventive method is shown in fig. 5. The apparatus is a heating oven 1, inside whose walls 2 is provided a compartment 2a to be heated. A glass panel 4 is brought into the compartment 2a to be heated on a roll conveyor 3 constituting a substantially horizontal conveying track. The compartment 2a to be heated is provided with upper blast means 5a, 5b, 11 and lower blast means 6a, 6b, 12 for convection air. These include preferably ducts 5a, 5b and 6a, 6b, the horizontal duct sections or boxes 5b and 6b thereof being provided with nozzles for blasting air A to top and bottom surfaces of the glass panel 4. The blasting power of air A can be adjusted for example by means of fans 11 and 12 disposed in communication with the duct sections 5b and 6b. The oven 1 can be further provided with radiation heaters (not shown), capable of heating a glass panel directly. The radiation heaters are mounted preferably above and below the glass panel 4, for example alongside the blast means.

In communication with duct sections 5a and 6a, on a suction side of the fans 11 and 12, are disposed heat accumulators 9 and 10 of the present invention. The heat accumulator comprises preferably a solid body, manufactured preferably in a heat accumulating material, such as metal, ceramics, silicon carbide or stone. The accumulators 9 and 10 include their own passages or flow paths, whereby the convection air A is adapted to proceed through the heat accumulators 9 and 10. The hot air A, blasted onto the glass panel's 4 surface, is circulated within the compartment 2a. Accordingly, the air A, blasted onto the glass panel 4, is guided (sucked) primarily from the glass panel 4 back to the heat accumulators 9 and 10. The accumulator 9 and 10 delivers heat, thus heating the air A passing through the accumulator.

In communication with the heat accumulators 9 and 10 are disposed respective resistances 7 and 8 used for heating the heat accumulators 9 and 10. The accumulators can be replaced or supplemented for example with gas burners, the heat of which is generated by a combustible gas. Unlike the prior art, a primary function of the resistances 7 and 8 is heating the heat accumulators 9 and 10, whereby the resistances can be rated for top power outputs which are lower than the heating effect needed at the early stage of heating the glass panel 4. Furthermore, the resistances can be optimized for such a power that the power output delivered thereby is substantially unchanged throughout the heating cycle. This unchanged power output, i.e. the average heating effect, is represented by a graph 103 shown in fig. 4. In practice, of course, the resistances 7 and 8 may have a power output hovering anywhere between the graphs 102 and 103, yet preferably closer to the graph 103. The achievable proximity to the graph 103 depends on the solidity of the heat accumulators 9 and 10 and the efficiency of heat transfer (heat transfer area) between the heat accumulators 9 and 10 and the convection air A. An example will now be described regarding such operation of the inventive apparatus.

At the initial stage of heating, a cold glass panel 4 is heated by means of the heat accumulators 9 and 10 or by a combined action of the heat accumulators 9 and 10 and the resistances 7 and 8. Heat is delivered thereby to convection air A to be recirculated with a power which substantially matches the graph 101 of fig. 2. The resistances 7 and 8 strive to heat the heat accumulators 9 and 10 simultaneously with a given substantially unchanging power. At the initial stage, the resistances 7 and 8 need not provide a power sufficiently high to maintain the initial temperature of the heat accumulators 9 and 10. When the heat flow proceeding to the glass panel 4 begins to decline over the final stage of heating, as depicted in fig. 2, the power of the resistances 7 and 8 reaches a limit at which some of the power delivered thereby is sufficient for heating the heat accumulators 9 and 10 and some of the power delivered thereby is sufficient for generating a heat flow required by the glass panel 4 at the final stage of heating (in other words, for heating the convection air passing through the heat accumulator). This is in part enabled by recirculation of the convection air, the heating of which, especially at the final stage, only requires a small amount of power generated by the resistances. This way, the heat accumulators can be heated to their initial temperature while completing the heating of a glass panel. Furthermore, the resistances 7 and 8 need not be adjusted during a heating cycle with respect to their power outputs or the adjustment demand is essentially lesser than in prior art solutions. In addition, the resistances need not be rated to match a peak power output, which is needed for generating a high-power heat flow for the initial stage of heating the glass panel 4.

## Claims

1. A method for heating glass panels (4) in a heating oven (1), wherein the glass panel (4) is supported on top of rolls (3) and said glass panel (4) is heated from above and below with convection air (A) or with a combination of convection air (A) and radiation heat, said convection air (A) being heated by electric resistances (7, 8) and/or a combustible gas, **characterized in that** the heating of convection air (A) is effected by using a heat accumulator (9, 10) inside the heating oven (1), and that the heat accumulator (9, 10) is heated by means of the electric resistances (7, 8) and/or a combustible gas.

2. A method as set forth in claim 1, **characterized in that**, throughout the heating cycle, the heat accumulator (9, 10) is heated with a power having a maximum rate substantially lower than the heating power required at the Initial stage of heating the glass panel (4).

3. A method as set forth in claim 1 or 2, **characterized in that** the heat accumulator (9, 10) is heated with a substantially constant power.

4. A heating oven for heating glass panels in the heating oven (1), comprising rolls (3) for supporting a glass panel (4), convection air blast means (5a, 5b, 11; 6a, 6b, 12) capable of heating the glass panel (4) either alone or in combination with thermal radiators, and further comprising electric resistances (7, 8) and/or a gas burner for heating convection air, **characterized in that** inside the heating oven (1) there is a heat accumulator (9, 10) capable of heating convection air (A) and that the heat accumulator (9, 10) is set in communication with the electric resistances (7, 8) and/or a gas burner for heating the heat accumulator (9, 10).

5. A heating oven as set forth in claim 4, **characterized in that** the maximum power output deliverable by the electric resistances (7, 8) and/or a combustible gas burner is substantially lower than the heating power required for heating the glass panel (4) at the initial stage of heating the glass panel (4).

6. A heating oven as set forth in claim 4 or 5, **characterized in that** in use the power output delivery by the electric resistances (7, 8) and/or a combustible gas is adjusted to be substantially constant.

## Patentansprüche

1. Verfahren zum Erwärmen von Glasscheiben (4) in einem Heizofen (1), wobei die Glasscheibe (4) oben auf Rollen (3) gelagert ist und die Glasscheibe (4) von oben und unten mit Konvektionsluft (A) oder mit einer Kombination aus Konvektionsluft (A) und Strahlungswärme erwärmt wird, wobei die Konvektionsluft (A) durch elektrische Widerstände (7, 8) und/oder ein brennbares Gas erwärmt wird, **dadurch gekennzeichnet, dass** das Erwärmen von Konvektionsluft (A) durch Verwenden eines Wärmespeichers (9, 10) innerhalb des Heizofens (1) bewirkt wird und dass der Wärmespeicher (9, 10) mittels der elektrischen Widerstände (7, 8) und/oder eines brennbaren Gases erwärmt wird.

2. Verfahren nach Anspruch 1, **dadurch gekennzeichnet, dass** während des gesamten Erwärmungszyklus der Wärmespeicher (9, 10) mit einer Leistung erwärmt wird, die einen Höchstwert wesentlich niedriger als die Heizleistung aufweist, die in der Anfangsphase des Erwärmens der Glasscheibe (4) benötigt wird.

3. Verfahren nach Anspruch 1 oder 2, **dadurch gekennzeichnet, dass** der Wärmespeicher (9, 10) mit einer im Wesentlichen konstanten Leistung erwärmt wird.

4. Heizofen zum Erwärmen von Glasscheiben im Heizofen (1), der Rollen (3) zum Lagern einer Glasscheibe (4), Konvektionsluftblasmittel (5a, 5b, 11; 6a, 6b, 12), die fähig sind, die Glasscheibe (4) entweder allein oder in Kombination mit Wärmetauschern zu erwärmen, umfasst und ferner elektrische Widerstände (7, 8) und/oder einen Gasbrenner zum Erwärmen von Konvektionsluft umfasst, **dadurch gekennzeichnet, dass** es innerhalb des Heizofens (1) einen Wärmespeicher (9, 10) gibt, der fähig ist, Konvektionsluft (A) zu erwärmen, und dass der Wärmespeicher (9, 10) in Verbindung mit den elektrischen Widerständen (7, 8) und/oder einem Gasbrenner gesetzt ist, um den Wärmespeicher (9, 10) zu erwärmen.

5. Heizofen nach Anspruch 4, **dadurch gekennzeichnet, dass** die Höchstausgangsleistung, die durch die elektrischen Widerstände (7, 8) und/oder einen Brenner für brennbares Gas abgegeben werden kann, wesentlich niedriger als die Heizleistung ist, die zum Erwärmen der Glasscheibe (4) in der Anfangsphase des Erwärmens der Glasscheibe (4) benötigt wird.

6. Heizofen nach Anspruch 4 oder 5, **dadurch gekennzeichnet, dass** in Benutzung die Ausgangsleistungsabgabe durch die elektrischen Widerstände (7, 8) und/oder ein brennbares Gas so eingestellt wird, dass sie im Wesentlichen konstant ist.

## Revendications

1. Procédé de chauffage de panneaux de verre (4) dans un four de chauffage (1), dans lequel le panneau de verre (4) est soutenu au sommet de rouleaux (3) et ledit panneau de verre (4) est chauffé par-dessus et par-dessous avec de l'air de convection (A) ou avec une combinaison d'air de convection (A) et de rayonnement de chaleur, ledit air de convection (A) étant chauffé par des résistances électriques (7,8) et/ou un gaz combustible, **caractérisé en ce que** le chauffage de l'air de convection (A) est effectué en utilisant un accumulateur de chaleur (9,10) à l'intérieur du four de chauffage (1), et **en ce que** l'accumulateur de chaleur (9,10) est chauffé au moyen des résistances électriques (7,8) et/ou d'un gaz combustible.

2. Procédé selon la revendication 1, **caractérisé en ce que**, au cours du cycle de chauffage, l'accumulateur de chaleur (9,10) est chauffé avec une puissance ayant un taux maximal substantiellement inférieur à la puissance de chauffage requise au stade initial de chauffage du panneau de verre (4).

3. Procédé selon la revendication 1 ou 2, **caractérisé en ce que** l'accumulateur de chaleur (9,10) est chauffé avec une puissance substantiellement constante.

4. Four de chauffage pour chauffer des panneaux de verre dans le four de chauffage (1), comprenant des rouleaux (3) pour soutenir un panneau de verre (4), un moyen de soufflage d'air de convection (5a, 5b ,11; 6a, 6b, 12) capable de chauffer le panneau de verre (4) soit seul, soit en combinaison ave des radiateurs thermiques, et comprenant en outre des résistances électriques (7,8) et/ou un brûleur de gaz pour chauffer l'air de convection, **caractérisé en ce que** à l'intérieur du four de chauffage (1) se trouve un accumulateur de chaleur (9,10) capable de chauffer l'air de convection (A) et **en ce que** l'accumulateur de chaleur (9,10) est réglé en communication avec les résistances électriques (7,8) et/ou un brûleur de gaz pour chauffer l'accumulateur de gaz (9,10).

5. Four de chauffage selon la revendication 4, **caractérisé en ce que** le rendement de puissance maximal pouvant être délivré par les résistances électriques (7,8) et/ou un brûleur de gaz combustible est substantiellement inférieur à la puissance de chauffage requise pour chauffer le panneau de verre (4) au stade initial de chauffage du panneau de verre (4).

6. Four de chauffage selon la revendication 4 ou 5, **caractérisé en ce que** en utilisation, la puissance de sortie délivrée par les résistances électriques (7,8) et/ou un gaz combustible est ajustée afin d'être substantiellement constante.
